(19) Europäisches Patentamt
European Patent Office
Office européen des brevets

(11) EP 2 128 186 A1

# (12) EUROPEAN PATENT APPLICATION

published in accordance with Art. 153(4) EPC

(43) Date of publication:
**02.12.2009 Bulletin 2009/49**

(21) Application number: **08738923.5**

(22) Date of filing: **26.03.2008**

(51) Int Cl.:
***C08J 3/22*** *(2006.01)* ***B60C 1/00*** *(2006.01)*
***C08K 3/36*** *(2006.01)* ***C08K 3/38*** *(2006.01)*
***C08K 5/16*** *(2006.01)* ***C08K 5/54*** *(2006.01)*
***C08L 7/00*** *(2006.01)* ***C08L 9/00*** *(2006.01)*

(86) International application number:
**PCT/JP2008/055735**

(87) International publication number:
**WO 2008/123306 (16.10.2008 Gazette 2008/42)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.03.2007 JP 2007081867**

(71) Applicant: **Bridgestone Corporation**
**Tokyo 104-8340 (JP)**

(72) Inventor: **SASAKA, Naohiro**
**Kodaira-shi**
**Tokyo 187-8531 (JP)**

(74) Representative: **Whalley, Kevin**
**Marks & Clerk LLP**
**90 Long Acre**
**London WC2E 9RA (GB)**

## (54) PROCESS FOR PRODUCING RUBBER COMPOSITION FOR TIRE TREAD

(57) A process for producing a rubber composition for tire treads which comprises a step of master batch mixing comprising mixing 20 to 150 parts by mass of silica (B), 1 to 30 parts by mass of a silane coupling agent (C) and a compound promoting reaction of silica and a silane coupling agent (D) with 100 parts by mass of a rubber component (A) comprising at least one of natural rubber and synthetic diene-based rubbers; and a step of final mixing comprising mixing a master batch obtained in the step of master batch mixing, a vulcanizing agent and a vulcanization accelerator. The rubber composition obtained in accordance with the above process increases abrasion resistance and also improves processability and productivity in the steps of mixing and extrusion.



Printed by Jouve, 75001 PARIS (FR)

## Description

### TECHNICAL FIELD

The present invention relates to a process for producing a rubber composition for tire treads which increases abrasion resistance of tires and also improves workability in the process for producing tread members of tires to a great degree.

### BACKGROUND ART

Recently, as the regulation on discharge of carbon dioxide is enhanced worldwide due to the growing interest on environmental problems, it is increasingly required that fuel cost of automobiles be decreased. To comply with the requirement, it is required for the performance of tires that the rolling resistance of tires be decreased. As the method for decreasing the rolling resistance of tires, heretofore, the use of a rubber composition exhibiting a lower heat buildup as the rubber composition applied to the tires is most widely conducted although optimization of the structure of the tires is also studied.
As the method for obtaining the rubber composition exhibiting a low heat buildup, the method of using silica as the filler is known.
In general, a silane coupling agent is used in the rubber composition comprising silica so that the reinforcing property of silica is enhanced, the property of exhibiting the low heat buildup is surely obtained, and abrasion resistance is increased.
However, when the reaction of the silane coupling agent with silica is insufficient, abrasion resistance is decreased since the reinforcing property of silica is not enhanced. Moreover, the silane coupling agent remaining unreacted in the mixing step of the rubber composition reacts in the extrusion step following the mixing step and causes a problem in that many pores and holes are formed in the extruded product of the rubber composition to decrease the accuracy of the dimension and the weight of the extruded product and to deteriorate the processability.
Although the reaction of silica and the silane coupling agent in the mixing step can be conducted completely by increasing the number of steps in the mixing step, productivity of the mixing step is decreased to a great degree.
In Patent Reference 1, it is proposed that, in the preliminary mixing step of rubber and silica, an organosilane disulfide having a relatively great purity is used as the silane coupling agent, and (1) elemental sulfur and (2) at least one of sulfur-donating substances which are polysulfide-based organic compounds having sulfur and exhibit the property such that at least a portion of sulfur is discharged at a temperature in the range of about 140°C to about 190°C are used as the activators of the reaction of silica and the silane coupling agent.
It is also attempted that a portion of the alkoxyl group in the silane coupling agent is replaced with an alkyl group so that the content of volatile alcohol components such as ethanol is decreased (refer to Patent References 2 to 5).
However, it is desired that abrasion resistance of tires is increased and processability and productivity in the mixing step and in the extrusion step are further improved.
[Patent Reference 1] Japanese Patent Application Laid-Open No. Heisei 8(1996)-259739
[Patent Reference 2] Japanese Patent Application Laid-Open No. 2002-275311
[Patent Reference 3] Japanese Patent Application (as a national phase under PCT) Laid-Open No. 2004-525230
[Patent Reference 4] A pamphlet for International Patent Application Laid-Open No. WO2004/000930
[Patent Reference 5] Japanese Patent Application Laid-Open No. 2006-169538

### DISCLOSURE OF THE INVENTION

The present invention has an object of overcoming the problems described above and providing a rubber composition for tire treads which increases abrasion resistance and also improves processability and productivity in the mixing step and in the extrusion step.
As the result of intensive studies by the present inventors to achieve the above object, it was found that the object could be achieved by mixing a compound promoting the reaction of silica and a silane coupling agent in the step of master batch mixing in the mixing step. The present invention has been completed based on the knowledge.
The present invention provides a process for producing a rubber composition for tire treads which comprises a step of master batch mixing comprising mixing 20 to 150 parts by mass of silica (B), 1 to 30 parts by mass of a silane coupling agent (C) and a compound promoting reaction of silica and a silane coupling agent (D) with 100 parts by mass of a rubber component (A) comprising at least one of natural rubber and synthetic diene-based rubbers; and a step of final mixing comprising mixing a master batch obtained in the step of master batch mixing, a vulcanizing agent and a vulcanization accelerator.

In accordance with the present invention, the rubber composition which increases abrasion resistance and also improves processability and productivity in the mixing step and in the extrusion step can be provided.

## THE MOST PREFERRED EMBODIMENT TO CARRY OUT THE INVENTION

The present invention will be described specifically in the following.

The present invention provides a process for producing a rubber composition for tire treads which comprises a step of master batch mixing comprising mixing 20 to 150 parts by mass of silica (B), 1 to 30 parts by mass of a silane coupling agent (C) and a compound promoting reaction of silica and a silane coupling agent (D) with 100 parts by mass of a rubber component (A) comprising at least one of natural rubber and synthetic diene-based rubbers; and a step of final mixing comprising mixing a master batch obtained in the step of master batch mixing, a vulcanizing agent and a vulcanization accelerator.

The amount of silica of Component (B) is restricted as described above since the effect of decreasing the rolling resistance of the tire and improving the steering control on wet road surfaces are insufficient when the amount of silica is smaller than 20 parts by mass, and processability and workability are decreased in the process for producing the tire to cause a decrease in the rolling resistance when the amount of silica exceeds 150 parts by mass.

The amount of the silane coupling agent of Component (C) is restricted as described above since the tire cannot surely exhibit the required abrasion resistance when the amount of the silane coupling agent of Component (C) is smaller than 1 part by mass, and the processability in the extrusion step in the process for producing the tire deteriorates due to formation of pores when the amount of the silane coupling agent exceeds 30 parts by mass.

As synthetic diene-based rubber in the rubber component of Component (A) used in the process for producing a rubber composition for tire treads of the present invention, styrene-butadiene copolymers (SBR), polybutadiene rubber (BR), polyisoprene rubber (IR), butyl rubber (IIR) and ethylene-propylene-diene terpolymers (EPDM) can be used. Natural rubber and the synthetic diene-based rubber may be used singly or as a blend of two or more.

Silica of Component (B) used in the process for producing a rubber composition for tire treads of the present invention may be any of wet silica and dry silica. Among these silicas, wet silica is preferable. It is preferable that the BET specific surface area of the silica is 40 to 350 $m^2/g$. When the BET specific surface area of the silica is in this range, an advantage is obtained in that the property for reinforcing rubber and the property for dispersion into the rubber component are simultaneously exhibited. From this standpoint, it is more preferable that the BET specific surface area of the silica is 80 to 300 $m^2/g$. As the silica described above, commercial products such as "NIPSIL AQ" and "NIPSIL KQ" manufactured by TOSO SILICA Co., Ltd. and "ULTRASIL VN3" manufactured by DEGUSSA Company can be used. The silica of Component (B) may be used singly or in combination with carbon black or other inorganic filler.

As the carbon black, any commercial products can be used. Among such carbon blacks, carbon blacks of the SAF grade, the ISAF grade, the IISAF grade, the HAF grade and the FEF grade are preferable, and carbon blacks of the HAF grade, the IISAF grade, the ISAF grade and the SAF grade are preferable. It is preferable that the DBP absorption of the carbon black is 80 $cm^3/100$ g or greater, more preferably 100 $cm^3/100$ g or greater, and most preferably 110 $cm^3/100$ g or greater. It is preferable that the specific surface area by nitrogen adsorption is 85 $m^2/g$ or greater, more preferably 100 $m^2/g$ or greater and most preferably 110 $m^2/g$ or greater.

Examples of the other inorganic filler include clay ($Al_2O_3 \cdot 2SiO_2$), kaolin ($Al_2O_3 \cdot 2SiO_2 \cdot 2H_2O$), pyrofilite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$ etc.), magnesium silicate ($Mg_2SiO_4$, $MgSiO_3$ etc.), calcium silicate ($Ca_2SiO_4$ etc.), aluminum calcium silicate ($Al_2O_3 \cdot CaO \cdot 2SiO_2$ etc.), magnesium calcium silicate ($CaMgSiO_4$) and aluminum hydroxide.

It is preferable that the silane coupling agent of Component (C) used for the process for producing a rubber composition for tire treads of the present invention is at least one compound selected from the group consisting of compounds represented by the following general formulae (I) to (V).

The rubber composition for tire treads produced in accordance with the present invention exhibits the excellent workability in processing rubber and provides a pneumatic tire exhibiting excellent abrasion resistance due to the use of the silane coupling agent of Component (C) described above.

General formulae (I) to (V) will be described successively.

$$R^1O)_{3-p}(R_2)_pSi\text{-}R^3\text{-}S_a\text{-}R^3\text{-}Si(OR^1{}_{3-r}(R^2)_r \qquad (I)$$

In the above general formula (I), a plurality of $R^1$ may represent the same group or different groups and each represent a linear, cyclic or branched alkyl group having 1 to 8 carbon atoms or a linear or branched alkoxyalkyl group having 2 to 8 carbon atoms. A plurality of $R^2$ may represent the same group or different groups and each represent a linear, cyclic or branched alkyl group having 1 to 8 carbon atoms. A plurality of $R^3$ may represent the same group or different groups

and each represent a linear or branched alkylene group having 1 to 8 carbon atoms, a represents a number of 2 to 6 as an average value, and p and r may represent the same number or different numbers and each represent a number of 0 to 3 as an average value excluding the case in which both of p and r represent 3.

Examples of the silane coupling agent represented by the above general formula (I) include bis(3-triethoxysilylpropyl) tetrasulfide, bis(3-trimethoxysilylpropyl) tetrasulfide, bis(3-methyldimethoxysilyl-propyl) tetrasulfide, bis(2-triethoxysilylethyl) tetrasulfide, bis(3-triethoxy-silylpropyl) disulfide, bis(3-trimethoxysilylpropyl) disulfide, bis(3-methyldimethoxysilylpropyl) disulfide, bis(2-triethoxysilylethyl) disulfide, bis(3-triethoxysilylpropyl) trisulfide, bis(3-trimethoxysilylpropyl) trisulfide, bis(3-methyldimethoxysilylpropyl) trisulfide, bis(2-triethoxy-silylethyl) trisulfide, bis(3-monoethoxydimethylsilylpropyl) tetrasulfide, bis(3-monoethoxydimethylsilylpropyl) trisulfide, bis(3-monoethoxy-dimethylsilylpropyl) disulfide, bis(3-monomethoxydimethylsilylpropyl) tetrasulfide, bis(3-monomethoxydimethylsilylpropyl) trisulfide, bis(3-monomethoxydimethylsilylpropyl) disulfide, bis(2-monoethoxydimethyl-silylethyl) tetrasulfide, bis(2-monoethoxydimethylsilylethyl) trisulfide and bis(2-monoethoxydimethylsilylethyl) disulfide.

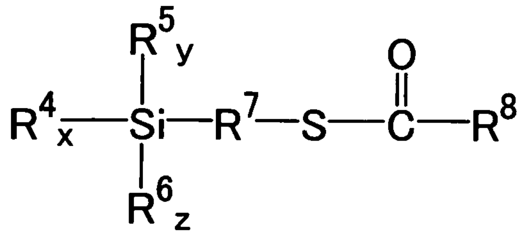

$\cdots$ (II)

In the above general formula (II), $R^4$ represents an atom or a monovalent group selected from -Cl, -Br, $R^9O$-, $R^9C(=O)O$-, $R9R^{10}C=NO$-, $R^9R^{10}CNO$-, $R^9R^{10}N$- and $-(OSiR^9R^{10})_h(OSiR^9R^{10}R^{11})$ ($R^9$, $R^{10}$ and $R^{11}$ representing the same atom or group or different atoms or groups and each representing hydrogen atom or a monovalent hydrocarbon group having 1 to 18 carbon atoms, and h representing a number of 1 to 4 as an average value). $R^5$ represents an atom or a group represented by $R^4$, hydrogen atom or a monovalent hydrocarbon group having 1 to 18 carbon atoms. $R^6$ represents an atom or a group represented by $R^4$ or $R^5$, hydrogen atom or $-[O(R^{12}O)_j]_{0.5}$ ($R^{12}$ representing an alkylene group having 1 to 18 carbon atoms, and j representing an integer of 1 to 4). $R^7$ represents a divalent hydrocarbon group having 1 to 18 carbon atoms. $R^8$ represents a monovalent hydrocarbon group having 1 to 18 carbon atoms. x, y and z represent numbers satisfying relations of $x+y+2z=3$, $0 \leqq x \leqq 3$, $0 \leqq y \leqq 2$ and $0 \leqq z \leqq 1$.

In the above general formula (II), $R^8$, $R^9$, $R^{10}$ and $R^{11}$ may represent the same group or different groups and preferably each represent a group selected from linear, cyclic or branched alkyl groups having 1 to 18 carbon atoms, alkenyl groups, aryl groups and aralkyl groups. When $R^5$ represents a monovalent hydrocarbon group having 1 to 18 carbon atoms, it is preferable that $R^5$ represents a group selected from linear, cyclic or branched alkyl groups, alkenyl groups, aryl groups and aralkyl groups. It is preferable that $R^{12}$ represent a linear, cyclic or branched alkylene group and more preferably a linear alkylene group. Examples of the group represented by $R^7$ include alkylene groups having 1 to 18 carbon atoms, alkenylene groups having 2 to 18 carbon atoms, cycloalkylene groups having 5 to 18 carbon atoms, cycloalkylalkylene groups having 6 to 18 carbon atoms, arylene groups having 6 to 18 carbon atoms and aralkylene groups having 7 to 18 carbon atoms. The alkylene group and the alkenylene group may be any of linear groups and branched groups. The cycloalkylene group, the cycloalkylalkylene group, the arylene group and the aralkylene group may have substituents such as lower alkyl groups on the ring. As the group represented by $R^7$, alkylene groups having 1 to 6 carbon atoms are preferable, and linear alkylene groups such as methylene group, ethylene group, trimethylene group, tetramethylene group, pentamethylene group and hexamethylene group are more preferable.

Examples of the monovalent hydrocarbon group having 1 to 18 carbon atoms represented by $R^5$, $R^8$, $R^9$, $R^{10}$ and $R^{11}$ in the above general formula (II) include methyl group, ethyl group, n-propyl group, isopropyl group, n-butyl group, isobutyl group, sec-butyl group, tert-butyl group, pentyl group, hexyl group, octyl group, decyl group, dodecyl group, cyclopentyl group, cyclohexyl group, vinyl group, propenyl group, allyl group, hexenyl group, octenyl group, cyclopentenyl group, cyclohexenyl group, phenyl group, tolyl group, xylyl group, naphthyl group, benzyl group, phenetyl group and naphthylmethyl group.

Examples of the group represented by $R^{12}$ in the above general formula (II) include methylene group, ethylene group, trimethylene group, tetramethylene group, pentamethylene group, hexamethylene group, octamethylene group, decamethylene group and dodecamethylene group.

Specific examples of the silane coupling agent of Component (C) represented by general formula (II) include 3-hexanoylthiopropyl-triethoxysilane, 3-octanoylthiopropoyltriethoxysilane, 3-decanoylthio-propyltriethoxysilane, 3-lauroylthiopropyltriethoxysilane, 2-hexanoylthio-ethyltriethoxysilane, 2-octanoylthioethyltriethoxysilane, 2-decanoylthio-ethyltriethoxysilane, 2-lauroylthioethyltriethoxysilane, 3-hexanoylthio-propyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane and 2-lauroylthioethyltrimethoxy-silane. Among these compounds, 3-octanoylthiopropyltriethoxysilane (manufactured by GENERAL ELECTRIC SILICONES Company; the trade name: NXT SILANE) is preferable.

$$(R^{13}O)_{3-s}R^{14})_sSi\text{-}R^{15}\text{-}S_k\text{-}R^{15}\text{-}Si(OR^{13})_{3-t}(R^{14})_t \qquad \text{(III)}$$

In the above general formula (III), a plurality of $R^{13}$ may represent the same group or different groups and each represent a linear, cyclic or branched alkyl group having 1 to 8 carbon atoms or a linear or branched alkoxyalkyl group having 2 to 8 carbon atoms. A plurality of $R^{14}$ may represent the same group or different groups and each represent a linear, cyclic or branched alkyl group having 1 to 8 carbon atoms. A plurality of $R^{15}$ may represent the same group or different groups and each represent a linear or branched alkylene group having 1 to 8 carbon atoms. $R^{16}$ represent a divalent group represented by one of ($-S-R^{17}-S-$), ($-R^{18}-S_{m1}-R^{19}-$) and ($-R^{20}-S_{m2}-R^{21}-S_{m3}-R^{22}-$) ($R^{17}$ to $R^{22}$ representing the same group or different groups and each representing a divalent hydrocarbon group, a divalent aromatic group or a divalent organic group having hetero-elements other than sulfur and oxygen, each having 1 to 20 carbon atoms, and m1, m2 and m3 representing the same number or different numbers and each representing a number of 1 or greater and smaller than 4 as an average value). A plurality of k may represent the same number or different numbers and each represent a number of 1 to 6 as an average value, and s and t may represent the same number or different numbers and each represent a number of 0 to 3 as an average value, excluding the case in which both of s and t represent 3.

Preferable examples of the silane coupling agent of Component (C) represented by the above general formula (III) include compounds expressed by:

the average formula of composition:

$$(CH_3CH_2O)_3Si\text{-}(CH_2)_3\text{-}S_2\text{-}(CH_2)_6\text{-}S_2\text{-}(CH_2)_3\text{-}Si(OCH_2CH_3)_3$$

the average formula of composition:

$$(CH_3CH_2O)_3Si\text{-}(CH_2)_3\text{-}S_2\text{-}(CH_2)_{10}\text{-}S_2\text{-}(CH_2)_3\text{-}Si(OCH_2CH_3)_3$$

the average formula of composition:

$$(CH_3CH_2O)_3Si\text{-}(CH_2)_3\text{-}S_3\text{-}(CH_2)_6\text{-}S_3\text{-}(CH_2)_3\text{-}Si(OCH_2CH_3)_3$$

the average formula of composition:

$$(CH_3CH_2O)_3Si\text{-}(CH_2)_3\text{-}S_4\text{-}(CH_2)_6\text{-}S_4\text{-}(CH_2)_3\text{-}Si(OCH_2CH_3)_3$$

the average formula of composition:

$$(CH_3CH_2O)_3Si\text{-}(CH_2)_3\text{-}S\text{-}(CH_2)_6\text{-}S_2\text{-}(CH_2)_6\text{-}S\text{-}(CH_2)_3\text{-}Si(OCH_2CH_3)_3$$

the average formula of composition:

$$(CH_3CH_2O)_3Si\text{-}(CH_2)_3\text{-}S\text{-}(CH_2)_6\text{-}S_3\text{-}(CH_2)_6\text{-}S\text{-}(CH_2)_3\text{-}Si(OCH_2CH_3)_3$$

the average formula of composition:

$$(CH_3CH_2O)_3Si\text{-}(CH_2)_3\text{-}S\text{-}(CH_2)_6\text{-}S_4\text{-}(CH_2)_6\text{-}S\text{-}(CH_2)_3\text{-}Si(OCH_2CH_3)_3$$

the average formula of composition:

$$(CH_3CH_2O)_3Si\text{-}(CH_2)_3\text{-}S\text{-}(CH_2)_{10}\text{-}S_2\text{-}(CH_2)_{10}\text{-}S\text{-}(CH_2)_3\text{-}Si(OCH_2CH_3)_3$$

the average formula of composition:

$$(CH_3CH_2O)_3Si\text{-}(CH_2)_3\text{-}S_4\text{-}(CH_2)_6\text{-}S_4\text{-}(CH_2)_6\text{-}S_4\text{-}(CH_2)_3\text{-}Si(OCH_2CH_3)_3$$

the average formula of composition:

$$(CH_3CH_2O)_3Si\text{-}(CH_2)_3\text{-}S_2\text{-}(CH_2)_6\text{-}S_2\text{-}(CH_2)_6\text{-}S_2\text{-}(CH_2)_3\text{-}Si(OCH_2CH_3)_3$$

and
the average formula of composition:

$$(CH_3CH_2O)_3Si\text{-}(CH_2)_3\text{-}S\text{-}(CH_2)_6\text{-}S_2\text{-}(CH_2)_6\text{-}S_2\text{-}(CH_2)_6\text{-}S\text{-}(CH_2)_3\text{-}Si(OCH_2CH_3)_3.$$

$$R^{23}R^{24}R^{25}Si\text{-}R^{26}\text{-}SH \qquad (IV)$$

In the above general formula (IV), $R^{23}$ represents a linear, cyclic or branched alkyl group or alkoxyl group having 1 to 8 carbon atoms. $R^{24}$ represents a linear, cyclic or branched alkoxyl group having 1 to 8 carbon atoms or $\text{-O-(Y-O)}_{m4}\text{-X}$ (Y representing a linear, cyclic or branched saturated or unsaturated divalent hydrocarbon group having 1 to 20 carbon atoms, X representing a linear, cyclic or branched alkyl group having 1 to 9 carbon atoms, and m4 representing a number of 1 to 40). $R^{25}$ represents a linear, cyclic or branched alkyl group having 1 to 8 carbon atoms or a group represented by $R^{24}$. $R^{26}$ represents a linear, cyclic or branched saturated or unsaturated alkylene group, cycloalkylene group, cycloalkylalkylene group, alkenylene group, arylene group or aralkylene group, each having 1 to 12 carbon atoms.

Examples of the silane coupling agent of Component (C) represented by the above general formula (IV) include 3-dimethyl-ethoxysilylpropyl mercaptan, 3-methyldiethoxysilylpropyl mercaptan, 3-diethylethoxysilylpropyl mercaptan, 3-ethyldiethoxysilylpropyl mercaptan, 3-dimethylmethoxysilylpropyl mercaptan, 3-methyl-dimethoxysilylpropyl mercaptan, 3-diethylmethoxysilylpropyl mercaptan, 3-ethyldimethoxysilylpropyl mercaptan and 3-mercaptopropyl-(triethoxysilane) (MPTES).

$$\underbrace{[R^{27}\text{-}C(=O)\text{-}S\text{-}G\text{-}SiZ^a{}_uZ^b{}_vZ^c{}_w]_m}_{A}\underbrace{[HS\text{-}G\text{-}SiZ^a{}_uZ^b{}_vZ^c{}_w]_n}_{B} \quad \cdots \quad (V)$$

In the above general formula (V), $R^{27}$ represents a linear, cyclic or branched alkyl group having 1 to 20 carbon atoms. A plurality of G may represent the same group or different groups and each represent an alkandiyl group or an alkendiyl group each having 1 to 9 carbon atoms. A plurality of $Z^a$ may represent the same group or different groups and each represent a group which can be each bonded to two silicon atoms and is selected from $[\text{-O-}]_{0.5}$, $[\text{-O-G-}]_{0.5}$ and $[\text{-O-G-O-}]_{0.5}$. A plurality of $Z^b$ may represent the same group or different groups and each represent a group which can be each bonded to two silicon atoms and is a functional group represented by $[\text{-O-G-O-}]_{0.5}$. A plurality of $Z^e$ may represent the same group or different groups and each represent a group which can be each bonded to two silicon atoms and is a functional group represented by -Cl, -Br, $\text{-OR}^a$, $R^aC(C=O)O\text{-}$, $R^aR^bC=NO\text{-}$, $R^aR^bN\text{-}$, $R^a\text{-}$ or HO-G-O-(G being as defined above), and $R^a$ and $R^b$ representing the same group or different groups and each representing a linear, cyclic or branched alkyl group having 1 to 20 carbon atoms. m, n, u, v and w may represent the same number or different numbers and represent numbers satisfying relations of $1 \leqq m \leqq 20$, $0 \leqq n \leqq 20$, $0 \leqq u \leqq 3$, $0 \leqq v \leqq 2$, $0<w \leqq 1$ and $(u/2)+v+2w=2$ or 3. When there are a plurality of portion A, $Z^a{}_u$, $Z^b{}_v$ and $Z^c{}_w$ in the plurality of portion A may be the same with or different from each other. When there are a plurality of portion B, $Z^a{}_u$, $Z^b{}_v$ and $Z^c{}_w$ in the plurality of portion B may be the same with or different from each other.

Examples of the silane coupling agent of Component (C) represented by the above general formula (V) include compounds represented by general formulae (VIII), (IX) and (X):

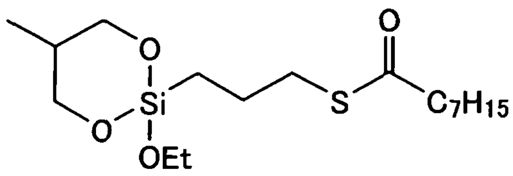

... (VIII)

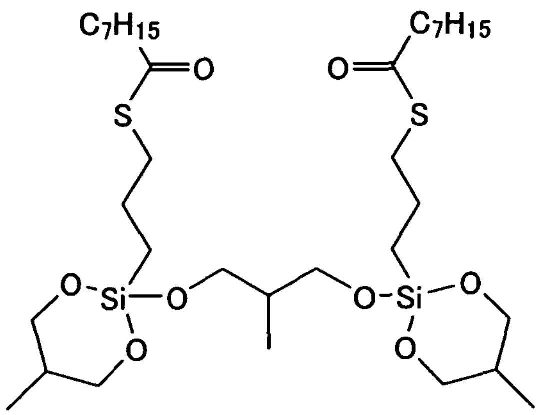

... (IX)

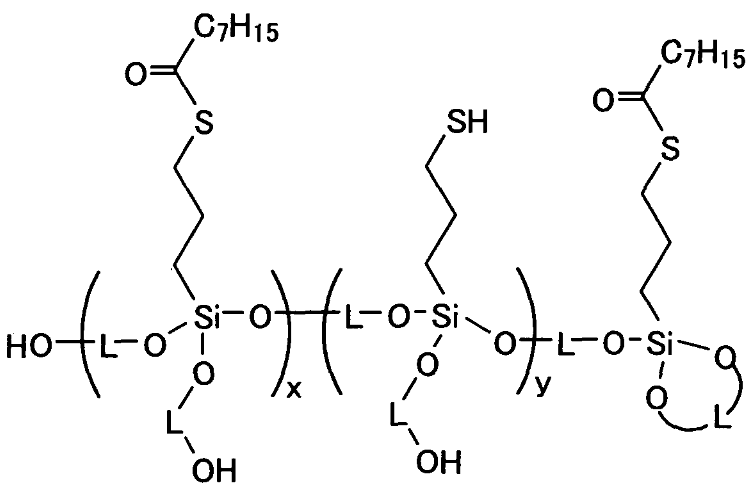

... (X)

In the above formulae, a plurality of L each independently represent an alkandiyl group or an alkendiyl group each having 1 to 9 carbon atoms, x=m, and y=n.

As the silane coupling agent represented by general formula (VIII), "NXT LOW-V SILANE" (a trade name) manufactured by MOMENTIVE PERFORMANCE MATERIALS Company is available as a commercial product.

As the silane coupling agent represented by general formula (IX), "NXT ULTRA LOW-V SILANE" (a trade name) manufactured by MOMENTIVE PERFORMANCE MATERIALS Company is available as a commercial product.

As the silane coupling agent represented by general formula (X), "NXT_Z" (a trade name) manufactured by MOMENTIVE PERFORMANCE MATERIALS Company is available as a commercial product.

Since the silane coupling agents which are compounds represented by the above general formulae (II), (VIII) and (IX)

have a protected mercapto group, early vulcanization (scorching) during processing in the steps before the vulcanization step can be prevented, and the processability is improved.
Since the silane coupling agent which are compounds represented by the above general formulae (VIII), (IX) and (X) have a great number of carbon atoms in the alkoxysilane, formation of volatile compounds VOC, (in particular, alcohols) is suppressed, and these compounds are preferable from the standpoint of the environment. In particular, the silane coupling agent represented by general formula (X) is more preferable since a low heat buildup can be obtained as the performance of the tire.
In the present invention, the silane coupling agent of Component (C) may be used singly or in combination of two or more.

As the compound promoting the reaction of silica and a silane coupling agent of Component (D) used for the process for producing a rubber composition for tire treads of the present invention (hereinafter, referred to as the "compound promoting the reaction" of Component (D)), at least one compound selected from basic a vulcanization accelerator, tertiary amine compounds, hydrates of inorganic salts, 1,2-benzenediol, imidazole compounds, organic sulfonic acids and water is used.
The compound promoting the reaction of Component (D) works as the catalyst for the reaction of alkoxyl groups and promotes the reaction of silica and the silane coupling agent in the step of master batch mixing. Alcohols and other volatile organic components generated by this reaction are vaporized during the mixing, and formation of pores in the extrusion step conducted after the mixing is prevented. The accuracy of the dimension and the weight of the molded product obtained after the extrusion is increased, and the processability and the productivity in the extrusion step is improved to a great degree. Moreover, since the reactivity of silica and the silane coupling agent is enhanced, the reinforcing property of silica and dispersion of silica into the rubber composition of Component (A) are improved, and an increase in the abrasion resistance of the tire can be provided.

Examples of the basic vulcanization accelerator include diphenylguanidine, 1,3-di-o-tolylguanidine, 1-o-tolylbiguanidide, dibutyl-thiourea and di-o-tolylguanidine salt of dicatechol borate. Diphenylguanidine is preferable among these compounds. When the basic vulcanization accelerator is used as the compound promoting the reaction of Component (D), it is preferable that the basic vulcanization accelerator in an amount of 0.7 to 2.5 parts by mass and more preferably in an amount of 0.8 to 1.5 parts by mass based on 100 parts by mass of the rubber component of Component (A) is mixed in the step of master batch mixing. When the amount of the basic vulcanization accelerator is 0.7 parts by mass or greater, the effect of promoting the reaction of silica and the silane coupling agent can be provided. When the amount of the basic vulcanization accelerator is 2.5 parts by mass or smaller, the property of the unvulcanized rubber on scorching is not deteriorated.
Since the basic vulcanization accelerator is used also as the accelerator of vulcanization with sulfur, the basic vulcanization accelerator may be added in a suitable amount to the master batch in the step of final mixing.

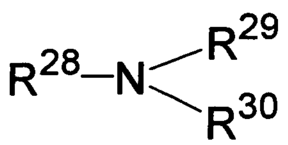

$\cdots$ (VI)

As the tertiary amine compound used as the compound promoting the reaction of Component (D), tertiary amine compounds represented by the above general formula (VI) are preferable. In the above general formula, $R^{28}$, $R^{29}$ and $R^{30}$ may represent the same group or different groups and each represent one of methyl group, an alkyl group having 2 to 36 carbon atoms, an alkenyl group having 8 to 35 carbon atoms, cyclohexyl group and benzyl group. It is preferable that at least one of $R^{28}$, $R^{29}$ and $R^{30}$ represents an alkyl group having 2 to 36 carbon atoms, an alkenyl group having 8 to 36 carbon atoms, cyclohexyl group or benzyl group. It is more preferable that the tertiary amine compound is a dimethylalkylamine represented by general formula (VI) in which $R^{28}$ and $R^{29}$ in the general formula each represent methyl group, and $R^{30}$ represents an alkyl group having 12 to 36 carbon atoms. Examples of the dimethylalkylamine include dimethylstearylamine, dimethylmyristyl-amine, dimethyloctadecenylamine, dimethylhexadecenylamine and dimethyldodecylamine.
It is preferable that the tertiary amine compound represented by general formula (VI) has a molecular weight of 180 or greater since the reaction can be conducted at the room temperature. When the molecular weight of the tertiary amine compound is smaller than 180, the reaction cannot be conducted at the room temperature and the workability becomes poor since the boiling point of the compound is at the room temperature or lower.
It is preferable that the above tertiary amine compound is mixed in an amount of 2 to 10 parts by mass and more preferably 2 to 6 parts by mass based on 100 parts by mass of the rubber component of Component (A) in the step of master batch mixing. When the amount of the tertiary amine compound is 2 parts by mass or greater, the effect of

improving the property for dispersion and the abrasion resistance, which is the object of using the tertiary amine compound, can be exhibited. When the amount of the tertiary amine compound is 10 parts by mass or smaller, the effect of improving the dispersion of silica is not saturated, and the abrasion resistance is surely obtained since the tertiary amine compound does not work adversely as a plasticizer. Therefore, an amount in the above range is preferable.

As the hydrate of an inorganic salt used as the compound promoting the reaction of Component (D), hydrates of sodium borate (hydrous sodium borate) are preferable, and borax ($Na_2B_4O_7.10H_2O$) is more preferable. It is preferable that the hydrate of an inorganic salt described above is mixed in an amount of 1 to 10 parts by mass and more preferably in an amount of 1 to 4 parts by mass based on 100 parts by mass of the rubber component of Component (A) in the step of master batch mixing. When the amount of the hydrate of an inorganic salt is 1 part by mass or greater, the effect of improving the property for dispersion and the abrasion resistance, which is the object of using the hydrate of an inorganic salt, can be exhibited. When the amount is 10 parts by mass or smaller, deterioration in the workability in the mixing due to formation of water can be prevented. Therefore, an amount in the above range is preferable.

It is preferable that 1,2-benzenediol used as the compound promoting the reaction of Component (D) is mixed in an amount of 0.3 to 4 parts by mass and more preferably in an amount of 0.5 to 2 parts by mass based on 100 parts by mass of the rubber component of Component (A) in the step of master batch mixing. When the amount of 1,2-benzenediol is 0.3 parts by mass or greater, the effect of improving the property for dispersion and the abrasion resistance, which is the object of using the 1,2-benzenediol, can be exhibited. When the amount is 4 parts by mass or smaller, the rate of vulcanization is not decreased. Therefore, an amount in the above range is preferable.

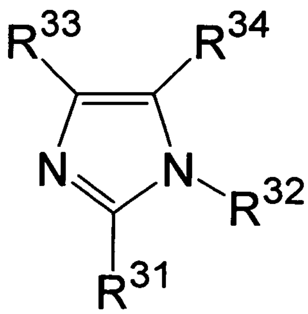

・・・(VII)

As the imidazole compound used as the compound promoting the reaction of Component (D), imidazole compounds represented by the above general formula (VII) are preferable. In the above general formula, $R^{31}$, $R^{32}$, $R^{33}$ and $R^{34}$ may represent the same atom or group or different atoms and groups and each represent hydrogen atom or a monovalent organic group. Two or more groups represented by $R^{31}$, $R^{32}$, $R^{33}$ and $R^{34}$ may be bonded to each other and form a ring. Examples of the imidazole compound described above include imidazole, 4-ethylaminoimidazole, 2-mercapto-1-methylimidazole, 1-methylimidazole, 2,4,5-triphenyl-imidazole, 2-methylimidazole, 2-ethyl-4-methylimidazole and 2-heptadecylimidazole. Imidazole is preferable among these compounds.

It is preferable that the above imidazole compound is mixed in an amount of 0.3 to 4 parts by mass and more preferably 0.5 to 2 parts by mass based on 100 parts by mass of the rubber component of Component (A) in the step of master batch mixing. When the amount of the imidazole compound is 0.3 parts by mass or greater, the effect of improving the property for dispersion and the abrasion resistance, which is the object of using the imidazole compound, can be exhibited. When the amount is 4 parts by mass or smaller, the property on scorching is not deteriorated. Therefore, an amount in the above range is preferable.

Examples of the organic sulfonic acid used as the compound promoting the reaction of Component (D) include p-toluenesulfonic acid and benzenesulfonic acid. It is preferable that the above organic sulfonic acid is mixed in an amount of 0.3 to 4 parts by mass and more preferably 0.5 to 2 parts by mass based on 100 parts by mass of the rubber component of Component (A) in the step of master batch mixing. When the amount of the organic sulfonic acid is 0.3 parts by mass or greater, the effect of improving the property for dispersion and the abrasion resistance, which is the object of using the organic sulfonic acid, can be exhibited. When the amount is 4 parts by mass or smaller, the rate of vulcanization is not decreased. Therefore, an amount in the above range is preferable.

It is preferable that water used as the compound promoting the reaction of Component (D) is mixed in an amount of 0.5 to 8 parts by mass based on 100 parts by mass of the rubber component of Component (A) in the step of master batch mixing. When the amount of water is 0.5 parts by mass or greater, the effect of improving the property for dispersion and the abrasion resistance, which is the object of using water, can be exhibited. When the amount is 8 parts by mass or smaller, the efficiency of mixing by the mixing machine is not decreased. Therefore, an amount in the above range is preferable.

above range is preferable.

The rubber composition for tire treads is prepared by mixing in separate steps, i.e., the step of master batch mixing as the preliminary step in which the rubber component and fillers are mixed mainly, in general, without mixing a vulcanizing agent or a vulcanization accelerator, and the step of final mixing in which a vulcanizing agent and a vulcanization accelerator are mixed to prepare a vulcanizable rubber composition. Where necessary, an intermediate mixing step is occasionally conducted between the step of master batch mixing and the step of final mixing mainly for decreasing the viscosity of the master batch. When the preparation of the master batch is difficult in a single step of master batch mixing, the step of master batch mixing is separated into two steps, and the first step of master batch mixing and the second step of master batch mixing are conducted, occasionally. In this case, the step of master batch mixing in the present invention means the first step of master batch mixing and/or the second step of master batch mixing.

In the process for producing a rubber composition for tire treads of the present invention, the rubber component of Component (A), silica of Component (B), the silane coupling agent of Component (C) and the compound promoting the reaction of Component (D) are mixed in the step of master batch mixing so that alcohols such as ethanol formed by the reaction of silica and the coupling agent and other volatile organic substances are vaporized during the mixing. Therefore, volatile substances such as alcohols are not generated in the extrusion step after the mixing step, and formation of pores in the product of extrusion is prevented. As described above, the effect of improving the abrasion resistance is also exhibited. The effect of the present invention is exhibited only when the compound promoting the reaction of Component (D) is mixed simultaneously when silica of Component (B) and the silane coupling agent of Component (C) are mixed with the rubber component of Component (A).

In the process for producing a rubber composition for tire treads of the present invention, in general, vulcanization activators such as stearic acid and zinc oxide, antioxidants and the like various compounding ingredients are mixed in the step of master batch mixing, in the step of final mixing or in the intermediate mixing step described above in accordance with the necessity.

The rubber composition for tire treads of the present invention is produced by the mixing using a Banbury mixer, rolls or an intensive mixer. The produced rubber composition is, then, extruded to form a member for the tread in the extrusion step. The obtained member is laminated and formed on a tire former in accordance with the conventional process, and a green tire is prepared. The prepared green tire is pressed under heating in a vulcanizing machine, and a tire is obtained.

The tire tread in the present invention means a cap tread constituting the portion of the tire which is brought into contact with road surfaces and/or a base tread which is disposed at the inside of the cap tread.

EXAMPLES

The present invention will be described more specifically with reference to examples in the following. However, the present invention is not limited to the examples.

The processability in the extrusion step and the abrasion resistance were evaluated in accordance with the following methods.

(1) Processability in the extrusion step

After a rubber obtained by mixing was extruded from an extruder to prepare a tread, formation of pores was examined on a section of the tread by visual observation. The number of pores per a unit area in a sample for evaluation was counted, and an index was obtained in accordance with the following equation:

$$\text{(number of pores in the sample of Comparative Example 1)} / \text{(number of pores in the sample for evaluation)} \times 100$$

The greater the index, the less the formation of pores, and the more excellent the processability.

(2) Abrasion resistance

A sample tire for evaluation was mounted on a passenger car, and the decrease in the depth of a groove in the sample tire was measured after driving for 10,000 km. An index was obtained in accordance with the following equation:

(decrease in depth of groove in sample tire of Comparative Example 1) / (decrease in depth of groove in the sample tire for evaluation) $\times$100

The greater the index, the more excellent the abrasion resistance.

Example 1 to 6 and Comparative Example 1

In accordance with the formulations and the processes for mixing shown in Table 1, the mixing was conducted using a Banbury mixer, and 7 types of rubber compositions were prepared. Using the 7 types of the prepared rubber compositions for both of the cap tread and the base tread, 7 types of tires having a size of 225/45R17 were prepared in accordance with the conventional process, and the processability in the extrusion step and the abrasion resistance were evaluated. The results are shown in Table 1.

Table 1

| Example<br>Comparative Example | <br>1 | 1 | 2 | 3 | 4 | 5 | 6 |
|---|---|---|---|---|---|---|---|
| Step of master batch mixing | | | | | | | |
| SBR-A *1 | 68.75 | 68.75 | 68.75 | 68.75 | 68.75 | 68.75 | 68.75 |
| SBR-B *2 | 68.75 | 68.75 | 68.75 | 68.75 | 68.75 | 68.75 | 68.75 |
| carbon black *3 | 10 | 10 | 10 | 10 | 10 | 10 | 10 |
| silica *4 | 80 | 80 | 80 | 80 | 80 | 80 | 80 |
| silane coupling agent Si69 *5 | 6.5 | 6.5 | 6.5 | - | - | - | - |
| silane coupling agent Si75 *6 | - | - | - | 6.5 | - | - | - |
| silane coupling agent NXT *7 | - | - | - | - | 6.5 | - | - |
| silane coupling agent A *8 | - | - | - | - | - | 6.5 | - |
| silane coupling agent B *9 | - | - | - | - | - | - | 6.5 |
| aromatic oil | 5 | 5 | 5 | 5 | 5 | 5 | 5 |
| vulcanization accelerator DPG *10 | - | 0.3 | 1.0 | 1.0 | 1.0 | 1.0 | 1.0 |
| Step of final mixing | | | | | | | |
| stearic acid | 2.0 | 2.0 | 2.0 | 2.0 | 2.0 | 2.0 | 2.0 |
| antioxidant 6C *13 | 1.0 | 1.0 | 1.0 | 1.0 | 1.0 | 1.0 | 1.0 |
| zinc oxide | 3.0 | 3.0 | 3.0 | 3.0 | 3.0 | 3.0 | 3.0 |
| vulcanization accelerator DPG *10 | 1.0 | 0.7 | - | - | 0.5 | - | - |
| vulcanization accelerator CZ *14 | 1.5 | 1.5 | 1.5 | 1.5 | 1.5 | 1.5 | 1.5 |
| vulcanization accelerator DM *15 | 0.8 | 0.8 | 0.8 | 0.8 | 0.8 | 0.8 | 0.8 |
| sulfur | 1.5 | 1.5 | 1.5 | 1.5 | 1.5 | 1.5 | 1.5 |
| Evaluation | | | | | | | |
| processability in extrusion step (index) | 100 | 102 | 115 | 116 | 118 | 118 | 125 |

(continued)

| | | | | | | | |
|---|---|---|---|---|---|---|---|
| Evaluation<br>abrasion resistance (index) | 100 | 100 | 107 | 107 | 105 | 109 | 104 |

Notes:

*1: Manufactured by JSR Co., Ltd.; SBR; the trade name: "#1712"

*2: Manufactured by ASAHI KASEI Co., Ltd.; SBR; the trade name: "TUFDENE 3335"

*3: ISAF-HS; manufactured by TOKAI CARBON Co., Ltd.; the trade name: "SEAST 7 HM"

*4: Manufactured by TOSO SILICA Co., Ltd.; the trade name: "NIPSIL AQ"

*5: bis(3-Triethoxysilylpropyl) tetrasulfide; a silane coupling agent manufactured by DEGUSSA Company; the trade name: "Si69"

*6: bis(3-Triethoxysilylpropyl) disulfide; a silane coupling agent manufactured by DEGUSSA Company; the trade name: "Si75"

*7: 3-(Octanoylthiopropyltriethoxysilane; manufactured by GENERAL ELECTRIC SILICONES Company; the trade name: "NXT SILANE"

*8: Formula of the average composition:

$$(CH_3CH_2O)_3\text{-Si-}(CH_2)_3\text{-S-}(CH_2)_6\text{-}S_{2.5}\text{-}(CH_2)_6\text{-S-}(CH_2)_3\text{-Si}(OCH_2CH_3)_3$$

*9: Dimethylethoxysilylpropylmercaptan

*10: Diphenylguanidine; manufactured by OUCHI SHINKO KAGAKU KOGYO Co., Ltd.; the trade name: "NOCCELER D"

*13: N-(1,3-Dimethylbutyl)-N'-phenyl-p-phenylenediamine; manufactured by OUCHI SHINKO KAGAKU KOGYO Co., Ltd.; the trade name: "NOCRAC 6C"

*14: N-(Cyclohexyl-2-benzothiazolylsulfenamide; manufactured by OUCHI SHINKO KAGAKU KOGYO Co., Ltd.; the trade name: "NOCCELER CZ"

*15: Dibenzothiazolyl disulfide; manufactured by OUCHI SHINKO KAGAKU KOGYO Co., Ltd.; the trade name: "NOCCELER DM"

Examples 2 and 7 to 14 and Comparative Example 1

In accordance with the formulations and the processes for mixing shown in Table 2, the mixing was conducted using a Banbury mixer, and 10 types of rubber compositions were prepared. Using the 10 types of the prepared rubber compositions for both of the cap tread and the base tread, 10 types of tires having a size of 225/45R17 were prepared in accordance with the conventional process, and the processability in the extrusion step and the abrasion resistance were evaluated. The results are shown in Table 2.

Table 2-1

| Example<br>Comparative Example | <br>1 | 2 | 7 | 8 | 9 |
|---|---|---|---|---|---|
| Step of master batch mixing<br>SBR-A *1 | 68.75 | 68.75 | 68.75 | 68.75 | 68.75 |

(continued)

| Example | | 2 | 7 | 8 | 9 |
|---|---|---|---|---|---|
| Comparative Example | 1 | | | | |
| Step of master batch mixing | | | | | |
| SBR-B *2 | 68.75 | 68.75 | 68.75 | 68.75 | 68.75 |
| carbon black *3 | 10 | 10 | 10 | 10 | 10 |
| silica *4 | 80 | 80 | 80 | 80 | 80 |
| silane coupling agent Si69 *5 | 6.5 | 6.5 | 6.5 | 6.5 | 6.5 |
| aromatic oil | 5 | 5 | 5 | 5 | 5 |
| vulcanization accelerator DPG *10 | - | 1.0 | - | - | - |
| tertiary amine compound *11 | - | - | 2.0 | - | - |
| hydrate of sodium borate *12 | - | - | - | 1.5 | - |
| 1,2-benzenediol | - | - | - | - | 1.0 |
| imidazole | - | - | - | - | - |
| p-toluenesulfonic acid | - | - | - | - | - |
| water | - | - | - | - | - |
| Step of final mixing | | | | | |
| stearic acid | 2.0 | 2.0 | 2.0 | 2.0 | 2.0 |
| antioxidant 6C *13 | 1.0 | 1.0 | 1.0 | 1.0 | 1.0 |
| zinc oxide | 3.0 | 3.0 | 3.0 | 3.0 | 3.0 |
| vulcanization accelerator DPG *10 | 1.0 | | 1.0 | 1.0 | 1.0 |
| vulcanization accelerator CZ *14 | 1.5 | 1.5 | 1.5 | 1.5 | 1.5 |
| vulcanization accelerator DM *15 | 0.8 | 0.8 | 0.8 | 0.8 | 0.8 |
| sulfur | 1.5 | 1.5 | 1.5 | 1.5 | 1.5 |
| Evaluation | | | | | |
| processability in extrusion step (index) | 100 | 115 | 110 | 118 | 109 |
| abrasion resistance (index) | 100 | 107 | 102 | 105 | 106 |

Table 2-2

| Example Comparative Example | 10 | 11 | 12 | 13 | 14 |
|---|---|---|---|---|---|
| Step of master batch mixing | | | | | |
| SBR-A *1 | 68.75 | 68.75 | 68.75 | 68.75 | 68.75 |
| SBR-B *2 | 68.75 | 68.75 | 68.75 | 68.75 | 68.75 |
| carbon black *3 | 10 | 10 | 10 | 10 | 10 |
| silica *4 | 80 | 80 | 80 | 80 | 80 |
| silane coupling agent Si69 *5 | 6.5 | 6.5 | 6.5 | 6.5 | 6.5 |
| aromatic oil | 5 | 5 | 5 | 5 | 5 |
| vulcanization accelerator DPG *10 | - | - | - | 1.0 | 1.0 |
| tertiary amine compound *11 | - | - | - | 2.0 | - |
| hydrate of sodium borate *12 | - | - | - | - | - |
| 1,2-benzenediol | - | - | - | - | 1.0 |
| imidazole | 1.0 | - | - | - | - |
| p-toluenesulfonic acid | - | 1.0 | - | - | - |
| water | - | - | 1.0 | - | - |
| Step of final mixing | | | | | |
| stearic acid | 2.0 | 2.0 | 2.0 | 2.0 | 2.0 |
| antioxidant 6C *13 | 1.0 | 1.0 | 1.0 | 1.0 | 1.0 |
| zinc oxide | 3.0 | 3.0 | 3.0 | 3.0 | 3.0 |

(continued)

| | | | | | |
|---|---|---|---|---|---|
| Step of final mixing | | | | | |
| vulcanization accelerator DPG *10 | 1.0 | 1.0 | 1.0 | - | - |
| vulcanization accelerator CZ : *14 | 1.5 | 1.5 | 1.5 | 1.5 | 1.5 |
| vulcanization accelerator DM *15 | 0.8 | 0.8 | 0.8 | 0.8 | 0.8 |
| sulfur | 1.5 | 1.5 | 1.5 | 1.5 | 1.5 |
| Evaluation | | | | | |
| processability in extrusion step (index) | 111 | 108 | 107 | 123 | 127 |
| abrasion resistance (index) | 104 | 103 | 104 | 109 | 109 |

Notes:

*1, *2, *3, *4, *5, *10, *13*, *14 and *15: as described for Table 1

*11: Dimethylstearylamine

*12: Decahydrate of sodium borate ($Na_2B_4O_7 \cdot 10H_2O$)

Examples 15 to 18 and Comparative Examples 2 and 3

In accordance with the formulations and the processes for mixing shown in Table 3, the mixing was conducted using a Banbury mixer, and 6 types of rubber compositions were prepared. Using the 6 types of the prepared rubber compositions for both of the cap tread and the base tread, 6 types of tires having a size of 225/45R17 were prepared in accordance with the conventional process, and the processability in the extrusion step and the abrasion resistance were evaluated. The results are shown in Table 3.

Table 3

| Example | | 15 | 16 | 17 | 18 | |
|---|---|---|---|---|---|---|
| Comparative Example | 2 | | | | | 3 |
| Step of master batch mixing | | | | | | |
| SBR-A *1 | 68.75 | 68.75 | 68.75 | 68.75 | 68.75 | 68.75 |
| SBR-B *2 | 68.75 | 68.75 | 68.75 | 68.75 | 68.75 | 68.75 |
| carbon black *3 | 10 | 10 | 10 | 10 | 10 | 10 |
| silica *4 | 80 | 80 | 80 | 80 | 80 | 80 |
| silane coupling agent NXT *7 | 0.8 | 1.0 | 15 | 22 | 30 | 32 |
| aromatic oil | 5 | 5 | 5 | 5 | 5 | 5 |
| vulcanization accelerator DPG *10 | 1.0 | 1.0 | 1.0 | 1.0 | 1.0 | 1.0 |
| Step of final mixing | | | | | | |
| stearic acid | 2.0 | 2.0 | 2.0 | 2.0 | 2.0 | 2.0 |
| antioxidant 6C *13 | 1.0 | 1.0 | 1.0 | 1.0 | 1.0 | 1.0 |
| zinc oxide | 3.0 | 3.0 | 3.0 | 3.0 | 3.0 | 3.0 |
| vulcanization accelerator CZ *14 | 1.5 | 1.5 | 1.5 | 1.5 | 1.5 | 1.5 |
| vulcanization accelerator DM *15 | 0.8 | 0.8 | 0.8 | 0.8 | 0.8 | 0.8 |
| sulfur | 1.5 | 1.5 | 1.5 | 1.5 | 1.5 | 1.5 |
| Evaluation | | | | | | |
| processability in extrusion step (index) | 98 | 102 | 117 | 119 | 114 | 110 |

(continued)

| | | | | | | |
|---|---|---|---|---|---|---|
| Evaluation | | | | | | |
| abrasion resistance (index) | 98 | 100 | 105 | 107 | 107 | 107 |

Notes:

*1, *2, *3, *4, *7, *10, *13*, *14 and *15: as described for Table 1

Examples 19 to 23 and Comparative Examples 4 and 5

In accordance with the formulations and the processes for mixing shown in Table 4, the mixing was conducted using a Banbury mixer, and 7 types of rubber compositions were prepared. Using the 7 types of the prepared rubber compositions for both of the cap tread and the base tread, 7 types of tires having a size of 225/45R17 were prepared in accordance with the conventional process, and the processability in the extrusion step and the abrasion resistance were evaluated. The results are shown in Table 2.

Table 4

| Example | | 19 | 20 | 21 | 22 | 23 | |
|---|---|---|---|---|---|---|---|
| Comparative Example | 4 | | | | | | 5 |
| Step of master batch mixing | | | | | | | |
| SBR-A *1 | 68.75 | 68.75 | 68.75 | 68.75 | 68.75 | 68.75 | 68.75 |
| SBR-B *2 | 68.75 | 68.75 | 68.75 | 68.75 | 68.75 | 68.75 | 68.75 |
| carbon black *3 | 10 | 10 | 10 | 10 | 10 | 10 | 10 - |
| silica *4 | 80 | 80 | 80 | 80 | 80 | 80 | 80 |
| silane coupling agent NXT_Z *8 | 0.8 | 1.0 | 6.5 | 15 | 22 | 30 | 32 |
| aromatic oil | 5 | 5 | 5 | 5 | 5 | 5 | 5 |
| vulcanization accelerator DPG *10 | 1.0 | 1.0 | 1.0 | 1.0 | 1.0 | 1.0 | 1.0 |
| Step of final mixing | | | | | | | |
| stearic acid | 2.0 | 2.0 | 2.0 | 2.0 | 2.0 | 2.0 | 2.0 |
| antioxidant 6C *13 | 1.0 | 1.0 | 1.0 | 1.0 | 1.0 | 1.0 | 1.0 |
| zinc oxide | 3.0 | 3.0 | 3.0 | 3.0 | 3.0 | 3.0 | 3.0 |
| vulcanization accelerator CZ *14 | 1.5 | 1.5 | 1.5 | 1.5 | 1.5 | 1.5 | 1.5 |
| vulcanization accelerator DM *15 | 0.8 | 0.8 | 0.8 | 0.8 | 0.8 | 0.8 | 0.8 |
| sulfur | 1.5 | 1.5 | 1.5 | 1.5 | 1.5 | 1.5 | 1.5 |
| Evaluation | | | | | | | |
| processability in extrusion step (index) | 100 | 104 | 109 | 119 | 121 | 116 | 112 |
| abrasion resistance (index) | 99 | 101 | 103 | 106 | 109 | 109 | 109 |

Notes:

*1, *2, *3, *4, *10, *13*, *14 and *15: as described for Table 1

*8: A compound represented by the above general formula (X); manufactured by MOMENTIVE PERFORMANCE MATERIAL Company; the trade name: "NXT_Z"

As clearly shown in Tables 1 and 2, the rubber compositions of Examples 1 to 14 exhibited more excellent processability in the extrusion step and more excellent abrasion resistance than those of the rubber composition of Comparative Example 1.
As clearly shown in Tables 3 and 4, the rubber compositions of Examples 15 to 18 exhibited more excellent processability in the extrusion step and more excellent abrasion resistance than those of the rubber composition of Comparative Example 2, and the rubber compositions of Examples 19 to 23 exhibited more excellent processability in the extrusion step and more excellent abrasion resistance than those of the rubber composition of Comparative Example 4

As clearly shown by the comparison of the results of Examples 17 and 18 with those of Comparative Example 2 and also by the comparison of the results of Examples 22 and 23 with those of Comparative Example 2, it is preferable that the upper limit of the amount of the silane coupling agent of Component (C) was set at 30 parts by mass since the processability in the extrusion step deteriorated when the silane coupling agent of Component (C) was used in an amount greater than 30 parts by mass.

## INDUSTRIAL APPLICABILITY

The process for producing a rubber composition for tire treads of the present invention can be advantageously used as the process for producing tread members for various pneumatic tires and, in particular, pneumatic radial tires for vehicles such as passenger cars, small trucks, light passenger cars, light trucks and large vehicles (trucks, buses, construction vehicles and the like).

## Claims

**1.** A process for producing a rubber composition for tire treads which comprises:

a step of master batch mixing comprising mixing 20 to 150 parts by mass of silica (B), 1 to 30 parts by mass of a silane coupling agent (C) and a compound promoting reaction of silica and a silane coupling agent (D) with 100 parts by mass of a rubber component (A) comprising at least one of natural rubber and synthetic diene-based rubbers; and
a step of final mixing comprising mixing a master batch obtained in the step of master batch mixing, a vulcanizing agent and a vulcanization accelerator.

**2.** A process for producing a rubber composition for tire treads according to Claim 1, wherein the silane coupling agent of Component (C) is at least one compound selected from a group consisting of compounds represented by following general formulae (I) to (V):

$$R^1O)_{3-p}(R_2)_pSi\text{-}R^3\text{-}S_a\text{-}R^3\text{-}Si(OR^1{}_{3-r}(R^2)_r \qquad (I)$$

wherein a plurality of $R^1$ may represent a same group or different groups and each represent a linear, cyclic or branched alkyl group having 1 to 8 carbon atoms or a linear or branched alkoxyalkyl group having 2 to 8 carbon atoms, a plurality of $R^2$ may represent a same group or different groups and each represent a linear, cyclic or branched alkyl group having 1 to 8 carbon atoms, a plurality of $R^3$ may represent a same group or different groups and each represent a linear or branched alkylene group having 1 to 8 carbon atoms, a represents a number of 2 to 6 as an average value, and p and r may represent a same number or different numbers and each represent a number of 0 to 3 as an average value excluding a case in which both of p and r represent 3:

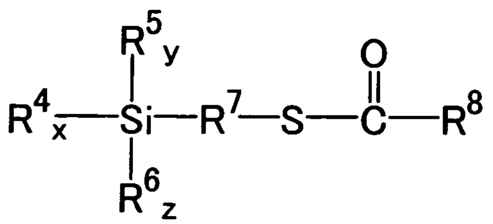

· · · (II)

wherein $R^4$ represents an atom or a monovalent group selected from -Cl, -Br, $R^9O$-, $R^9C(=O)O$-, $R^9R^{10}C=NO$-, $R^9R^{10}CNO$-, $R^9R^{10}N$- and - $(OSiR^9R^{10})_h(OSiR^9R^{10}R^{11})$ ($R^9$, $R^{10}$ and $R^{11}$ representing a same atom or group or different atoms or groups and each representing hydrogen atom or a monovalent hydrocarbon group having 1 to 18 carbon atoms, and h representing a number of 1 to 4 as an average value), $R^5$ represents an atom or a group represented by $R^4$, hydrogen atom or a monovalent hydrocarbon group having 1 to 18 carbon atoms, $R^6$ represents an atom or a group represented by $R^4$ or $R^5$, hydrogen atom or $-[O(R^{12}O)_j]_{0.5}$ ($R^{12}$ representing an alkylene group having 1 to 18 carbon atoms, and j representing an integer of 1 to 4), $R^7$ represents a divalent hydrocarbon group having 1 to 18 carbon atoms, $R^8$ represents a monovalent hydrocarbon group having 1 to 18 carbon atoms, and x, y and z represent numbers satisfying relations of $x+y+2z=3$, $0 \leqq x \leqq 3$, $0 \leqq y \leqq 2$ and $0 \leqq z \leqq 1$;

$$(R^{13}O)_{3-s}R^{14})_sSi\text{-}R^{15}\text{-}S_k\text{-}R^{15}\text{-}Si(OR^{13})_{3-t}(R^{14})_t \qquad (III)$$

wherein a plurality of $R^{13}$ may represent a same group or different groups and each represent a linear, cyclic or branched alkyl group having 1 to 8 carbon atoms or a linear or branched alkoxyalkyl group having 2 to 8 carbon atoms, a plurality of $R^{14}$ may represent a same group or different groups and each represent a linear, cyclic or branched alkyl group having 1 to 8 carbon atoms, a plurality of $R^{15}$ may represent a same group or different groups and each represent a linear or branched alkylene group having 1 to 8 carbon atoms, $R^{16}$ represent a divalent group represented by one of $(\text{-}S\text{-}R^{17}\text{-}S\text{-})$, $(\text{-}R^{18}\text{-}S_{m1}\text{-}R^{19}\text{-})$ and $(\text{-}R^{20}\text{-}S_{m2}\text{-}R^{21}\text{-}S_{m3}\text{-}R^{22}\text{-})$ ($R^{17}$ to $R^{22}$ representing a same group or different groups and each representing a divalent hydrocarbon group, a divalent aromatic group or a divalent organic group having hetero-elements other than sulfur and oxygen, each having 1 to 20 carbon atoms, and m1, m2 and m3 representing a same number or different numbers and each representing a number of 1 or greater and smaller than 4 as an average value), k may represent a same number or different numbers and represent a number of 1 to 6 as an average value, and s and t may represent a same number or different numbers and each represent a number of 0 to 3 as an average value excluding a case in which both of s and t represent 3;

$$R^{23}R^{24}R^{25}Si\text{-}R^{26}\text{-}SH \qquad (IV)$$

wherein $R^{23}$ represents a linear, cyclic or branched alkyl group or alkoxyl group having 1 to 8 carbon atoms, $R^{24}$ represents a linear, cyclic or branched alkoxyl group having 1 to 8 carbon atoms or $\text{-}O\text{-}(Y\text{-}O)_{m4}\text{-}X$ (Y representing a linear, cyclic or branched saturated or unsaturated divalent hydrocarbon group having 1 to 20 carbon atoms, X representing a linear, cyclic or branched alkyl group having 1 to 9 carbon atoms, and m4 representing a number of 1 to 40), $R^{25}$ represents a linear, cyclic or branched alkyl group having 1 to 8 carbon atoms or a group represented by $R^{24}$, $R^{26}$ represents a linear, cyclic or branched saturated or unsaturated alkylene group, cycloalkylene group, cycloalkylalkylene group, alkenylene group, arylene group or aralkylene group, each having 1 to 12 carbon atoms; and

$$\underbrace{[R^{27}\text{-}C(=O)\text{-}S\text{-}G\text{-}SiZ^a_uZ^b_vZ^c_w]_m}_{A}\underbrace{[HS\text{-}G\text{-}SiZ^a_uZ^b_vZ^c_w]_n}_{B} \quad \cdots \quad (V)$$

wherein $R^{27}$ represents a linear, cyclic or branched alkyl group having 1 to 20 carbon atoms, a plurality of G may represent a same group or different groups and each represent an alkandiyl group or an alkendiyl group each having 1 to 9 carbon atoms, a plurality of $Z^a$ may represent a same group or different groups and each represent a group which can be each bonded to two silicon atoms and is selected from $[\text{-}O\text{-}]_{0.5}$, $[\text{-}O\text{-}G\text{-}]_{0.5}$ and $[\text{-}O\text{-}G\text{-}O\text{-}]_{0.5}$, a plurality of $Z^b$ may represent a same group or different groups and each represent a group which can be each bonded to two silicon atoms and is a functional group represented by $[\text{-}O\text{-}G\text{-}O\text{-}]_{0.5}$, a plurality of $Z^c$ may represent a same group or different groups and each represent a group which can be each bonded to two silicon atoms and is a functional group represented by -Cl, -Br, $\text{-}OR^a$, $R^aC(=O)O\text{-}$, $R^aR^bC=NO\text{-}$, $R^aR^bN\text{-}$, $R^a\text{-}$ or HO-G-O- (G being as defined above), and $R^a$ and $R^b$ representing a same group or different groups and each representing a linear, cyclic or branched alkyl group having 1 to 20 carbon atoms), m, n, u, v and w may represent a same number or different numbers and represent numbers satisfying relations of $1 \leqq m \leqq 20$, $0 \leqq n \leqq 20$, $0 \leqq u \leqq 3$, $0 \leqq v \leqq 2$, $0 < w \leqq 1$ and $(u/2)+v+2w=2$ or 3, when there are a plurality of portion A, $Z^a_u$, $Z^b_v$ and $Z^c_w$ in the plurality of portion A may be same with or different from each other and, when there are a plurality of portion B, $Z^a_u$, $Z^b_v$ and $Z^c_w$ in the plurality of portion B may be same with or different from each other.

**3.** A process for producing a rubber composition for tire treads according to any one of Claims 1 and 2, wherein the compound promoting reaction of silica and a silane coupling agent of Component (D) is a basic vulcanization accelerator, and 0.7 to 2.5 parts by mass of the basic vulcanization accelerator based on 100 parts by mass of the rubber component of Component (A) is mixed in the step of master batch mixing.

**4.** A process for producing a rubber composition for tire treads according to Claim 3, wherein the basic vulcanization accelerator is diphenylguanidine.

**5.** A process for producing a rubber composition for tire treads according to any one of Claims 1 and 2, wherein the compound promoting reaction of silica and a silane coupling agent of Component (D) is a tertiary amine compound represented by following general formula (VI):

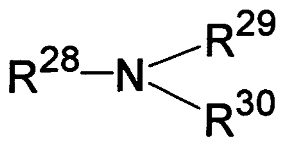

· · · (VI)

wherein $R^{28}$, $R^{29}$ and $R^{30}$ may represent a same group or different groups and each represent one of methyl group, an alkyl group having 2 to 36 carbon atoms, an alkenyl group having 8 to 36 carbon atoms, cyclohexyl group and benzyl group; and 2 to 10 parts by mass of the tertiary amine compound based on 100 parts by mass of the rubber component of Component (A) is mixed in the step of master batch mixing.

**6.** A process for producing a rubber composition for tire treads according to Claim 5, wherein the tertiary amine compound represented by general formula (VI) has a molecular weight of 180 or greater.

**7.** A process for producing a rubber composition for tire treads according to Claim 5, wherein the tertiary amine compound represented by general formula (VI) is a dimethylalkylamine represented by general formula (VI) in which $R^{28}$ and $R^{29}$ each represent methyl group, and $R^{30}$ represents an alkyl group having 12 to 36 carbon atoms.

**8.** A process for producing a rubber composition for tire treads according to any one of Claims 1 and 2, wherein the compound promoting reaction of silica and a silane coupling agent of Component (D) is a hydrate of an inorganic salt, and 1 to 10 parts by mass of the hydrate of an inorganic salt based on 100 parts by mass of the rubber component of Component (A) is mixed in the step of master batch mixing.

**9.** A process for producing a rubber composition for tire treads according to Claim 8, wherein the hydrate of an inorganic salt is a hydrate of sodium borate.

**10.** A process for producing a rubber composition for tire treads according to any one of Claims 1 and 2, wherein the compound promoting reaction of silica and a silane coupling agent of Component (D) is 1,2-benzenediol, and 0.3 to 4 parts by mass of 1,2-benzenediol based on 100 parts by mass of the rubber component of Component (A) is mixed in the step of master batch mixing.

**11.** A process for producing a rubber composition for tire treads according to any one of Claims 1 and 2, wherein the compound promoting reaction of silica and a silane coupling agent of Component (D) is an imidazole compound represented by following general formula (VII):

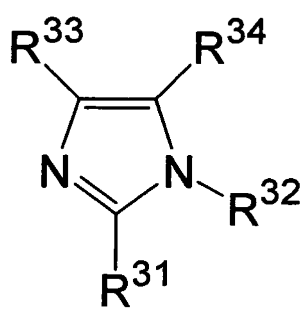

· · · (VII)

wherein $R^{31}$, $R^{32}$, $R^{33}$ and $R^{34}$ may represent a same atom or group or different atoms or groups and each represent hydrogen atom or a monovalent organic group, and two or more groups represented by $R^{31}$, $R^{32}$, $R^{33}$ and $R^{34}$ may bonded to each other to form a ring; and 0.3 to 4 parts by mass of the imidazole compound based on 100 parts by mass of the rubber component of Component (A) is mixed in the step of master batch mixing.

**12.** A process for producing a rubber composition for tire treads according to any one of Claims 1 and 2, wherein the compound promoting reaction of silica and a silane coupling agent of Component (D) is an organic sulfonic acid, and 0.3 to 4 parts by mass of the organic sulfonic acid based on 100 parts by mass of the rubber component of

Component (A) is mixed in the step of master batch mixing.

**13.** A process for producing a rubber composition for tire treads according to any one of Claims 1 and 2, wherein the compound promoting reaction of silica and a silane coupling agent of Component (D) is water, and 0.5 to 8 parts by mass of water based on 100 parts by mass of the rubber component of Component (A) is mixed in the step of master batch mixing.

**14.** A process for producing a rubber composition for tire treads according to Claim 2, wherein the silane coupling agent represented by general formula (V) of Component (C) is a silane coupling agent expressed by one of formula (VIII):

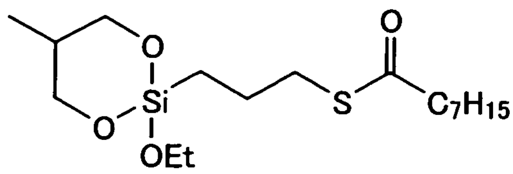

・・・(VIII)

formula (IX):

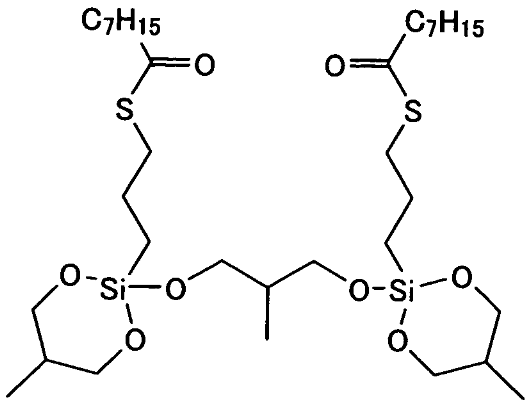

・・・(IX)

and formula (X):

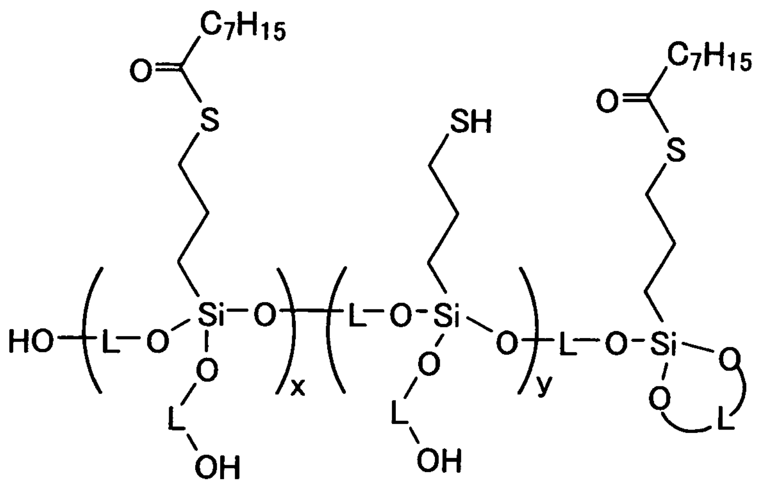

・・・(X)

wherein a plurality of L each independently represent an alkandiyl group or alkendiyl group each having 1 to 9 carbon atoms, x=m, and y=n.

## INTERNATIONAL SEARCH REPORT

International application No.
PCT/JP2008/055735

A. CLASSIFICATION OF SUBJECT MATTER
*C08J3/22*(2006.01)i, *B60C1/00*(2006.01)i, *C08K3/36*(2006.01)i, *C08K3/38*(2006.01)i, *C08K5/16*(2006.01)i, *C08K5/54*(2006.01)i, *C08L7/00*(2006.01)i, *C08L9/00*(2006.01)i

According to International Patent Classification (IPC) or to both national classification and IPC

B. FIELDS SEARCHED

Minimum documentation searched (classification system followed by classification symbols)
C08J3/00-28, C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-521515 A (Societe de Technologie Michelin), 16 July, 2002 (16.07.02), Claims; Par. Nos. [0019] to [0022], [0025] to [0027]; examples & US 6420488 B1 & EP 1115785 A & WO 2000/005300 A1 & AU 5038799 A & BR 9912334 A & CA 2338152 A & CN 1315983 A | 1-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 May, 2008 (30.05.08) | 10 June, 2008 (10.06.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No. PCT/JP2008/055735

C (Continuation). DOCUMENTS CONSIDERED TO BE RELEVANT

| Category* | Citation of document, with indication, where appropriate, of the relevant passages | Relevant to claim No. |
|---|---|---|
| X | JP 2002-521516 A (Societe de Technologie Michelin), 16 July, 2002 (16.07.02), Claims; Par. Nos. [0025], [0035], [0036]; examples & US 2001/0034389 A1 & EP 1102812 A & WO 2000/005301 A1 & AU 5161699 A & BR 9912343 A & CA 2338150 A & CN 1318086 A | 1-4 |
| X<br>A | JP 2002-275311 A (Bridgestone Corp.), 25 September, 2002 (25.09.02), Full text (Family: none) | 1,2<br>3,4 |
| X | JP 2004-525230 A (Societe de Technologie Michelin), 19 August, 2004 (19.08.04), Claims; examples & US 2004/0132880 A1 & EP 1392769 A & WO 2002/083782 A1 & FR 2823215 A & CA 2443137 A & BR 208413 A & CN 1501959 A | 1-4 |
| X | JP 2005-536575 A (Societe de Technologie Michelin), 02 December, 2005 (02.12.05), Claims; examples & US 2005/0032949 A1 & EP 1474475 A & WO 2003/054075 A1 & CN 1606593 A | 1-4 |
| X<br>A | JP 8-53579 A (Bayer AG.), 27 February, 1996 (27.02.96), Claims; Par. No. [0039]; examples & US 5569721 A & EP 683203 A2 & DE 4417354 A & CA 2149377 A | 1,3,4<br>2 |
| X | JP 8-259739 A (The Goodyear Tire & Rubber Co.), 08 October, 1996 (08.10.96), Claims; Par. Nos. [0055], [0059] & JP 10-182847 A & US 5580919 A & US 5674932 A & EP 732362 A1 & EP 845493 A1 & AU 4807096 A & BR 9600999 A & CA 2160637 A & AR 1218 A & CN 1138600 A & BR 9705755 A & CA 2209414 A | 1-4 |
| A | WO 2004/000930 A1 (Bridgestone Corp.), 31 December, 2003 (31.12.03), Full text & US 2005/0176861 A1 & EP 1514898 A1 & CN 1662595 A | 1-4 |

Form PCT/ISA/210 (continuation of second sheet) (April 2007)

**INTERNATIONAL SEARCH REPORT**

International application No.
PCT/JP2008/055735

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-169538 A (Degssa AG.), 29 June, 2006 (29.06.06), Full text & US 2006/0160935 A1 & EP 1672017 A2 & DE 102004061014 A & CA 2530346 A & KR 2006-0069787 A & CN 1789315 A & CA 2530346 A1 | 1-4 |
| P,X | JP 2007-154130 A (The Yokohama Rubber Co., Ltd.), 21 June, 2007 (21.06.07), Full text (Family: none) | 1 |

Form PCT/ISA/210 (continuation of second sheet) (April 2007)

**INTERNATIONAL SEARCH REPORT**

International application No.
PCT/JP2008/055735

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
Claim 1 and that part of claims 2-4 in which (C) is the formula (I).

**Remark on Protest** the
☐ The additional search fees were accompanied by the applicant's protest and, where applicable, payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (April 2007)

INTERNATIONAL SEARCH REPORT

International application No. PCT/JP2008/055735

Continuation of Box No.III of continuation of first sheet(2)

(i) Classification of the subject matters

Invention 1: Claim 1, that part of claim 2 in which the silane coupling agent (C) is the general formula (I), and that part of claims 3-4 in which claim 2 in which the silane coupling agent (C) is the general formula (I) is cited

Invention 2: That part of claims 5-7 in which the silane coupling agent (C) in claim 2 is the general formula (I)

Invention 3: That part of claims 8-9 in which the silane coupling agent (C) in claim 2 is the general formula (I)

Invention 4: That part of claim 10 in which the silane coupling agent (C) in claim 2 is the general formula (I)

Invention 5: That part of claim 11 in which the silane coupling agent (C) in claim 2 is the general formula (I)

Invention 6: That part of claim 12 in which the silane coupling agent (C) in claim 2 is the general formula (I)

Invention 7: That part of claim 13 in which the silane coupling agent (C) in claim 2 is the general formula (I)

Invention 8: That part of claim 2 in which the silane coupling agent (C) is the general formula (II), and that part of claims 3-4 in which claim 2 in which the silane coupling agent (C) is the general formula (II) is cited

Invention 9: That part of claims 5-7 in which the silane coupling agent (C) in claim 2 is the general formula (II)

Invention 10: That part of claims 8-9 in which the silane coupling agent (C) in claim 2 is the general formula (II)

Invention 11: That part of claim 10 in which the silane coupling agent (C) in claim 2 is the general formula (II)

Invention 12: That part of claim 11 in which the silane coupling agent (C) in claim 2 is the general formula (II)

Invention 13: That part of claim 12 in which the silane coupling agent (C) in claim 2 is the general formula (II)

Invention 14: That part of claim 13 in which the silane coupling agent (C) in claim 2 is the general formula (II)

Invention 15: That part of claim 2 in which the silane coupling agent (C) is the general formula (III), and that part of claims 3-4 in which claim 2 in which the silane coupling agent (C) is the general formula (III) is cited

Inventions 16-21: That part of claims 5-7 (invention 16), that part of claims 8-9 (invention 17), that part of claim 10 (invention 18), that part of claim 11 (invention 19), that part of claim 12 (invention 20), and that part of claim 13 (invention 21) in each of which the silane coupling agent (C) in claim 2 is the general formula (III)

Invention 22: That part of claim 2 in which the silane coupling agent (C) is the general formula (IV), and that part of claims 3-4 in which claim 2 in which the silane coupling agent (C) is the general formula (IV) is cited

Inventions 23-28: That part of claims 5-7 (invention 23), that part of claims 8-9 (invention 24), that part of claim 10 (invention 25), that part of claim 11 (invention 26), that part of claim 12 (invention 27), and that part of claim 13 (invention 28) in each of which the silane coupling agent (C) in claim 2 is the general formula (IV)

(continued to the next sheet)

INTERNATIONAL SEARCH REPORT

International application No. PCT/JP2008/055735

Invention 29: That part of claim 2 in which the silane coupling agent (C) is the general formula (V), that part of claims 3-4 in which claim 2 in which the silane coupling agent (C) is the general formula (V) is cited, and claim 14

Inventions 30-35: That part of claims 5-7 (invention 30), that part of claims 8-9 (invention 31), that part of claim 10 (invention 32), that part of claim 11 (invention 33), that part of claim 12 (invention 34), and that part of claim 13 (invention 35) in each of which the silane coupling agent (C) in claim 2 is the general formula (V)

Invention 36: That part of claims 3-4 in which claim 1 only is cited (that is, the case where the silane coupling agent (C) is none of the general formulae (I) to (V))

Invention 37: That part of claims 5-7 in which claim 1 only is cited

Invention 38: That part of claims 8-9 in which claim 1 only is cited

Invention 39: That part of claim 10 in which claim 1 only is cited

Invention 40: That part of claim 11 in which claim 1 only is cited

Invention 41: That part of claim 12 in which claim 1 only is cited

Invention 42: That part of claim 13 in which claim 1 only is cited

(ii)

The technical feature of the invention (1) (i.e., in producing a rubber composition for tire treads, a rubber ingredient is kneaded together with silica, a silane coupling agent represented by, e.g., the general formula (I), and a reaction-accelerating compound, e.g., diphenylguanidine, to produce a masterbatch and then a vulcanizer and a vulcanization accelerator are added to knead them) is not novel because it is disclosed in the following documents 1-7. It cannot hence be considered that that feature is a so-called "special technical feature."

In view of this, the subject matters of claims 1-14 in this international application are classified into the forty-two inventions shown above. There is no technical relationship among these inventions which involves one or more identical or corresponding special technical features. Consequently, they are not considered to be so linked as to form a single general inventive concept.

Document 1: JP 2002-521515 A (Societe de Technologie Michelin), 16 July, 2002, Claims, [0019]-[0022], [0025]-[0027], Examples

Document 2: JP 2002-521516 A (Societe de Technologie Michelin), 16 July, 2002, Claims, [0025], [0035], [0036], Examples

Document 3: JP 2002-275311 A (Bridgestone Corp.), 25 September, 2002, the whole document

Document 4: JP 2004-525230 A (Societe de Technologie Michelin), 19 August, 2004, Claims, Examples

Document 5: JP 2005-536575 A (Societe de Technologie Michelin), 2 December, 2005, Claims, Examples

Document 6: JP 8-53579 A (Bayer AG.), 27 February, 1996, Claims, [0039], Examples

Document 7: JP 8-259739 A (The Goodyear Tire & Rubber Co.), 8 October, 1996, Claims, [0055], [0059]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEISEI81996259739 B
- JP 2002275311 A
- JP 2004525230 A
- WO 2004000930 A
- JP 2006169538 A